(19) Europäisches Patentamt

European Patent Office

Office européen des brevets

(11) **EP 1 441 333 A2**

(12) **EUROPEAN PATENT APPLICATION**

(43) Date of publication:
28.07.2004 Bulletin 2004/31

(51) Int Cl.⁷: **G11B 7/007**

(21) Application number: **04000855.9**

(22) Date of filing: **16.01.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **23.01.2003 JP 2003014600**

(71) Applicant: **Kabushiki Kaisha Toshiba**
**Tokyo (JP)**

(72) Inventors:
 • **Ogawa, Akihito**
 **Minato-ku, Tokyo 105 (JP)**

 • **Noda, Chosaku**
 **Minato-ku, Tokyo 105 (JP)**
 • **Matsumaru, Masaaki**
 **Minato-ku, Tokyo 105 (JP)**
 • **Nagai, Yuuji**
 **Minato-ku, Tokyo 105 (JP)**

(74) Representative: **Henkel, Feiler & Hänzel**
**Möhlstrasse 37**
**81675 München (DE)**

(54) **Information recording medium, information recording/reproducing method, and information recording/reproducing device**

(57)    There is disclosed an information recording medium comprising a guide groove for recording/reproducing information in an information recording region, the information is formed as a recorded mark both in concave and convex portions of the guide groove, management information including address information is recorded by a wobble of the guide groove, and the wobble is formed in such a manner that an offset of a reproducing signal of the recorded mark generated by the wobble of the guide groove is 5.5% or less of an amplitude of the reproducing signal.

FIG. 16

**Description**

The present invention relates to an optical disk in which address information is recorded as a wobble of a recording track, and an optical disk drive which records/reproduces information with respect to an optical disk.

As well known, in recent years, an optical disk having a single-sided one-layer capacity of 4.7 GB has been practically used as an optical disk capable of recording information at a high density. For example, there are DVD-ROM which is an optical disk for exclusive use in reproduction, rewritable DVD-RAM, DVD-RW, and +RW. Standards of the DVD-RAM are described in detail in ECMA-274, 2nd Edition-June 1999, page 30 (internet URL: http://www/ecma.ch). The standards of the DVD-RW are described in detail in ECMA-330, 2nd Edition-June 1999 (page 29), internet URL: http://www/ecma.ch.

For these optical disks, an information recording layer is formed on a transparent substrate, a laser beam is focused on the layer, and the information is accordingly recorded/reproduced. As means for recording/reproducing the information, the information recording layer of the optical disk includes a guide groove called the groove. The information is recorded/reproduced along this guide groove. A physical address is formed along the guide groove in order to specify a spatial position where the information is recorded/reproduced.

Here, as means for densification, a technique referred to as land-and-groove recording is used in the DVD-RAM. In the DVD-RAM, the information is recorded both in the groove which is a concave portion and a land which is a convex portion with respect to the guide groove, accordingly an interval of recording data in a radial direction is narrowed, and a recording capacity is increased. On the other hand, the physical address is formed by concave/convex portions, called prepits, on the substrate. The guide groove is interrupted by a portion in which the prepit is formed.

On the other hand, the information is recorded only in the groove which is the concave portion of the guide groove in +RW. On the other hand, modulation of a groove wobble (hereinafter referred to as the wobble modulation) is used to slightly vibrate the guide groove in a radial direction as means for forming the physical address. Since the physical address by the wobble modulation does not cut off a recording track, there are advantages that an area for recording user information is broad, that is, format efficiency is high and compatibility with media for exclusive use in reproduction is easily achieved.

On the other hand, (2, 10) RLL whose shortest code is 3T has been used as a modulation system in the above-described DVD, but at present, a modulation system in which the shortest code of (1, 7) RLL or the like is 2T has intensively been studied as the modulation system for increasing a recording density of the user information. A slice system has been used as a binarizing or demodulating system of the user information in the DVD, but at present a PRML system capable of increasing the recording density of a signal by leaps and bounds has actively been studied.

In a conventional system by which the physical address is recorded by the wobble modulation, when the wobble of the concave portion is modulated, phenomenon of a change in a width of the convex portion by an influence of modulation occurs. When the user information recorded in the convex portion is reproduced, there is a problem that the change leaks as an offset of an amplitude direction into a reproducing signal.

Therefore, in the DVD-RAM in which the signal is recorded both in the concave and convex portions, the address is recorded by forming the prepit, not by the modulation of the wobble. As a result, a user information recording region is narrowed in order to secure a prepit region. That is, there are problems that a recording capacity drops and that the guide groove is divided in a prepit portion and therefore a tracking servo for scanning a beam spot along the guide groove is not easily continuously operated and that the compatibility with the disk for exclusive use in reproduction is not easily achieved.

Moreover, the physical address is recorded by the wobble modulation in +RW, but the user information is recorded only in the concave portion. As a result, the influence of the width fluctuation of the convex portion can be ignored, but it is difficult to narrow the interval of the signal in the radial direction as in the DVD-RAM, and there is a problem that the recording density drops. This is because the interval between the concave portions is smaller than that of DVD-RAM, when the density is raised in the recording only in the concave portion. Therefore, the amplitude of a tracking error signal which is information reproduced from the guide groove becomes small, a tracking capability drops, and a narrow concave portion is low in manufacturing properties.

On the other hand, as the technique for increasing the recording density, a modulation system including a 2T code, which has intensively been studied at present, or a demodulation system in which the information of the amplitude direction such as PRML is used to carry out demodulation has a disadvantage that the system is weak against the offset of the amplitude direction.

The present invention has been developed to solve the above-described problems, and an object thereof is to provide an information recording medium, an information recording/reproducing method, and an information recording/reproducing device in which a modulation method of a wobble, configuration, and the like are optimized to establish both land-and-groove recording and wobble modulation address and in which high-density recording and stable tracking are possible and compatibility with media for exclusive use in reproduction is high.

To achieve the object, according to one aspect of the present invention, there is provided an information recording medium comprising: a guide groove via which information is recorded/reproduced with respect to an information recording region. The information is formed as a recorded mark both in concave and convex portions of the guide groove, management information including address information is recorded by a wobble of the guide groove, and the wobble is formed in such a manner that an offset of an amplitude direction of a reproducing signal of the recorded mark generated by the wobble of the guide groove is 5.5% or less of an amplitude of the reproducing signal.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a diagram showing a constitution of an optical disk drive according to one embodiment of the present invention;

FIG. 2 is a diagram showing a constitution example of a four-division PD;

FIG. 3 is a diagram showing a constitution of a track formed on an optical disk;

FIG. 4 is an enlarged view of the track formed on the optical disk;

FIGS. 5A to 5C are enlarged views of the track seen from above, showing sum and difference signals of a reproducing signal;

FIGS. 6A and 6B are diagrams showing frequency-modulated and phase-modulated wobbles;

FIG. 7 is a diagram showing a constitution example of a demodulation circuit of physical address information;

FIG. 8 is a diagram showing a constitution example of an information recording region of the optical disk;

FIG. 9 is a diagram showing a constitution of the information by wobble modulation;

FIG. 10 is a top plan view of the phase-modulated track;

FIG. 11 is a diagram showing a sum signal of a land track;

FIG. 12 is a top plan view of the disk in which user information is recorded in both tracks;

FIG. 13 is a diagram showing a sine offset generated in an RF signal including the user information;

FIG. 14 is a diagram showing a four-value phase modulation of the wobble by use of phases of 0, 90, 180, and 270 degrees;

FIG. 15 shows a wobble in a case where a maximum phase difference Pmax of adjacent tracks is reduced down to 90 degrees;

FIG. 16 is a diagram based on experiment results showing a relation between an offset amount of the RF signal and a demodulation error ratio in demodulating the user information from the RF signal;

FIG. 17 is an explanatory view of a standardized RF signal offset;

FIG. 18 is a diagram showing a relation between a radial tilt of the disk and the demodulation error ratio of the RF signal;

FIG. 19 is an explanatory view of a wobble track amplitude WTpp, track pitch, and groove interval WG;

FIG. 20 is a diagram based on computer simulation results showing a basic track width TW, minimum track width, and maximum track width;

FIG. 21 is a diagram based on the computer simulation results showing a relation between a track width fluctuation amount and the offset amount of the RF signal;

FIG. 22 is a diagram showing a relation between a wobble track amplitude and the standardized wobble signal amplitude;

FIG. 23 is a diagram based on the experiment results showing the standardized wobble amplitude;

FIG. 24 is a diagram based on the experiment results showing the relation between the amplitude of the wobble groove and the wobble demodulation error ratio;

FIG. 25 is a diagram based on the computer simulation results showing a relation between the standardized wobble signal amplitude and the wobble demodulation error ratio;

FIGS. 26A and 26B are explanatory views showing a difference of the sum signal in frequency modulation and phase modulation;

FIG. 27 is a diagram showing a relation between a standardized sum signal offset and track width fluctuation amount;

FIG. 28 is a diagram showing a constitution of an optical disk medium manufacturing device according to one embodiment of the present invention; and

FIG. 29 is a flowchart for preparing an optical disk medium.

An embodiment of the present invention will hereinafter be described in detail with reference to the drawings.

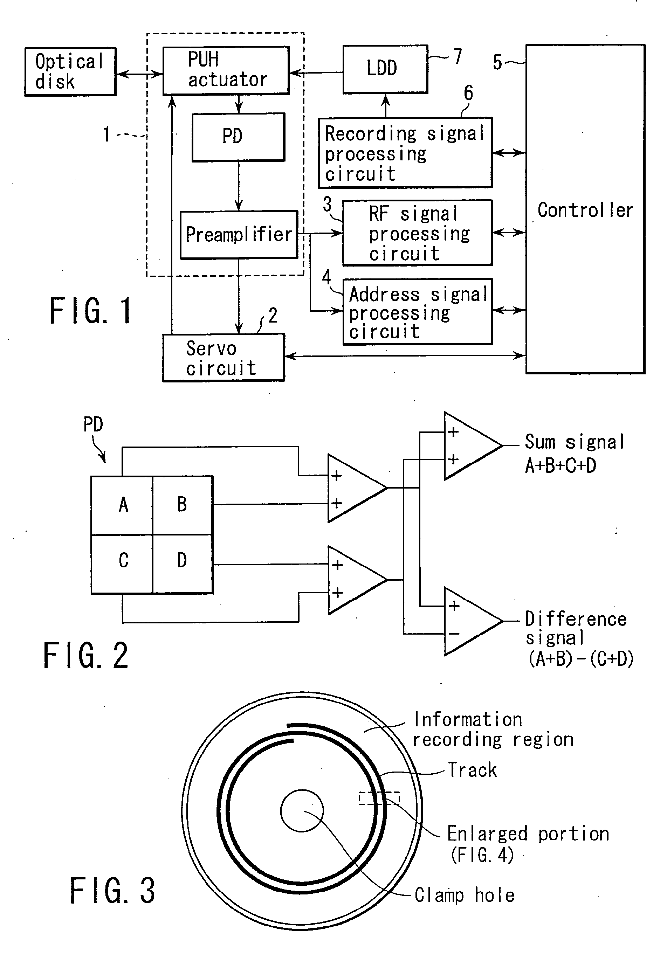

FIG. 1 shows a constitution of an optical disk drive according to one embodiment of the present invention. For the optical disk drive of the present invention, a laser light emitted from a pick up head (PUH) 1 is focused on an information recording layer of an optical disk to record/reproduce information. The light reflected by the disk is again transmitted through an optical system of the PUH 1, and detected as an electric signal by a photo detector (PD).

The PD is divided into two or more, a signal obtained by adding outputs of devices is referred to as a sum signal, and a signal obtained by subtraction is referred to as a difference signal. Especially, the sum signal obtained by adding high-frequency information such as user information is referred to as an RF signal. A signal obtained by subtracting an output signal of each device disposed in a radial direction with respect to the optical disk is referred to as a radial push/pull signal. FIG. 2 shows an example of a four-division PD. The signal obtained by adding all the output signals of four devices is the sum signal, and a result obtained by adding the output signals of two devices and subtracting the added signals forms the difference signal. This difference signal is especially referred to as the radial push/pull signal.

The detected electric signal is amplified with a preamplifier, and is outputted to a servo circuit 2, RF signal processing circuit 3, and address signal processing circuit 4.

In the servo circuit 2, servo signals indicating focus, tracking, tilt, and the like are generated, and the respective signals are outputted to focus, tracking, and tilt actuators of the PUH 1.

The RF signal processing circuit 3 processes mainly the sum signal among the detected signals to reproduce information such as recorded user information. Examples of a demodulation method in this case include a slice system and PRML method.

In the address signal processing circuit 4, the detected signal is processed to read physical address information indicating recording positions on the optical disk, and the information is outputted to a controller. A controller 5 reads the information such as the user information of a desired position based on the address information, or records the information such as the user information in the desired position. In this case, the user information is modulated into a signal suitable for optical disk recording in a recording signal processing circuit 6. For example, modulation rules such as (1, 10) RLL and (2, 10) RLL are applied. A laser driver (LDD) 7 supplies a laser driving signal to the PUH 1 in response to a signal modulated by the recording signal processing circuit 6. For the PUH 1, light is emitted from a semiconductor laser (not shown) in response to the laser driving signal, and the optical disk is irradiated with a light beam.

The optical disk of the present invention includes a guide groove called a groove in an information recording area in an information recording layer on a transparent substrate. The guide groove is referred to as a track, and the information is record/reproduce along this track. There are a spiral type track continuously connected to the outside from the inside as shown in FIG. 3, and a concentric circle type track formed of a plurality of concentric circles although not shown.

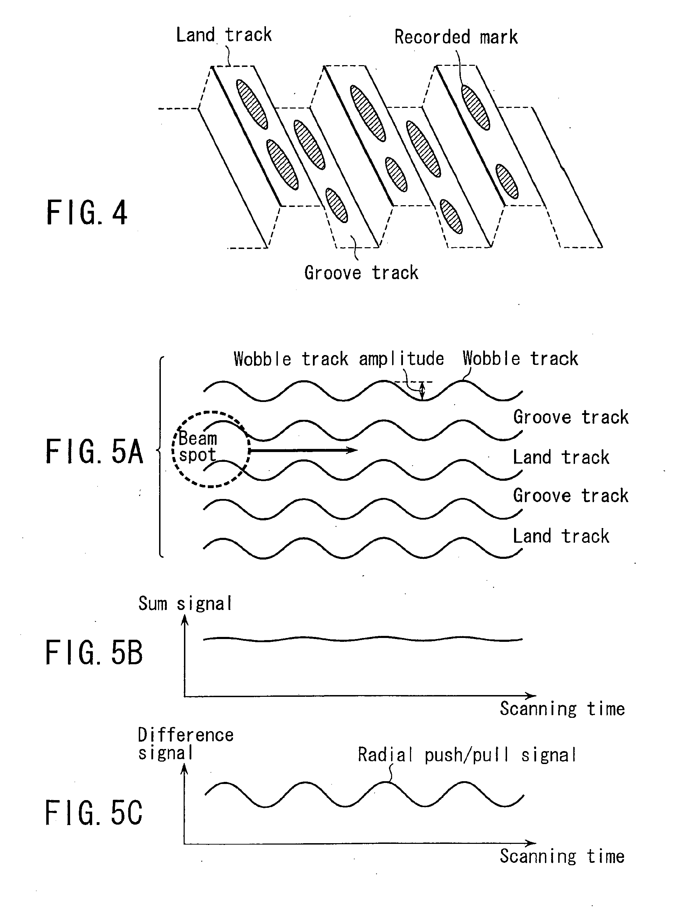

FIG. 4 shows an enlarged view of the track. The track is formed by concave and convex portions of the information recording layer, one portion is referred to as the groove, and the other portion is referred to as the land. In the optical disk of the present invention, the information is recorded as a recorded mark both in the land and groove to increase a recording density of the radial direction. Furthermore, in the present invention, an amplitude drop of the radial push/pull signal for use as a tracking error signal for scanning a beam spot along the track is suppressed, and the tracking is facilitated.

FIG. 5A shows a diagram of the track seen from above. The track of the optical disk of the present invention slightly meanders in the radial direction. This track is referred to as the wobble track. When the focused beam spot is scanned along the wobble track, the beam spot substantially travels straight through a center of the wobble track, because a frequency of the wobble is higher than that of a band of a tracking servo signal. At this time, as shown in FIGS. 5B, 5C, the sum signal hardly changes, and the difference signal of the radial direction, that is, only the radial push/pull signal changes in accordance with the wobble. This will be referred to as the wobble signal. The wobble signal is used in adjustment of a rotary frequency of a spindle or is used as a reference of a recording clock or physical address information.

In the optical disk of the present invention, the wobble signal is modulated to record the physical address information indicating a physical position of the optical disk in an information recording region.

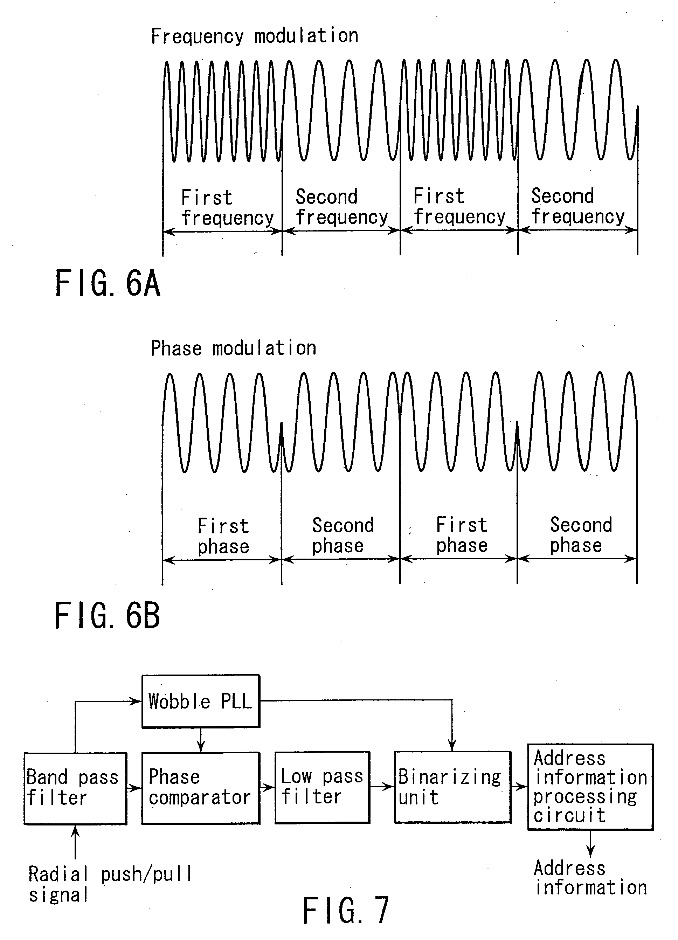

That is, as shown in FIGS. 6A, 6B, the wobble imparted to the track is frequency-modulated or phase-modulated to record the physical address information. The recorded physical address information can be read by use of a demodulation circuit shown, for example, in FIG. 7.

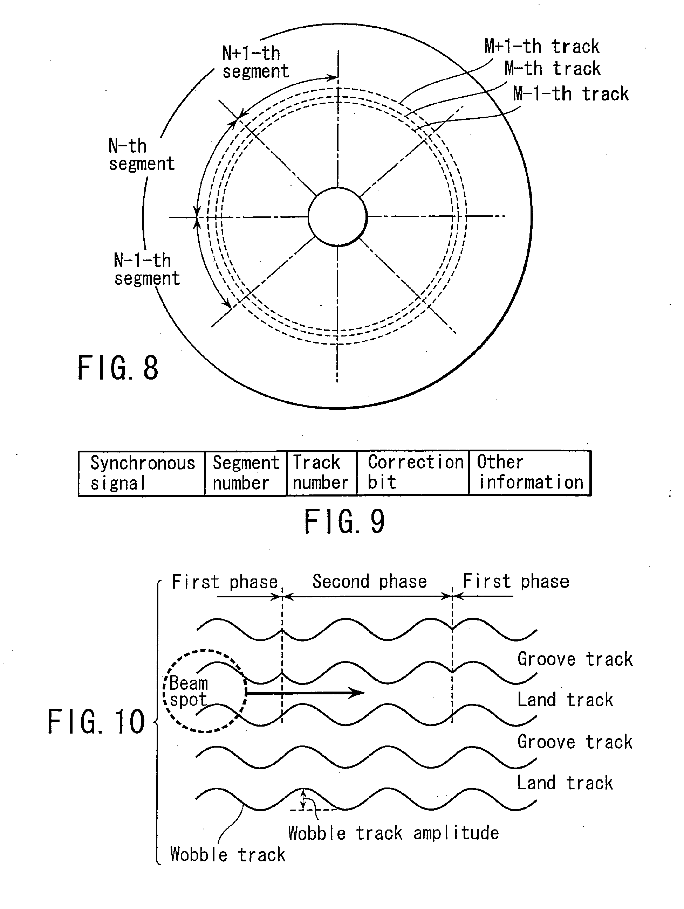

FIG. 8 shows a constitution of the information recording region of the optical disk. In the optical disk of the present invention, to specify the physical position on the information recording region, as shown in FIG. 8, a track number and segment number are used. Track numbers are attached to tracks in order to specify the position of the radial direction. Furthermore, the track is divided into a plurality of segments, and segment numbers are attached, so that a position of a tangential direction can be specified. At this time, for example, when the wobble in one segment is modulated, address information as position information can be recorded once or a plurality of times. The constitution of the information by the wobble modulation is shown, for example, in FIG. 9.

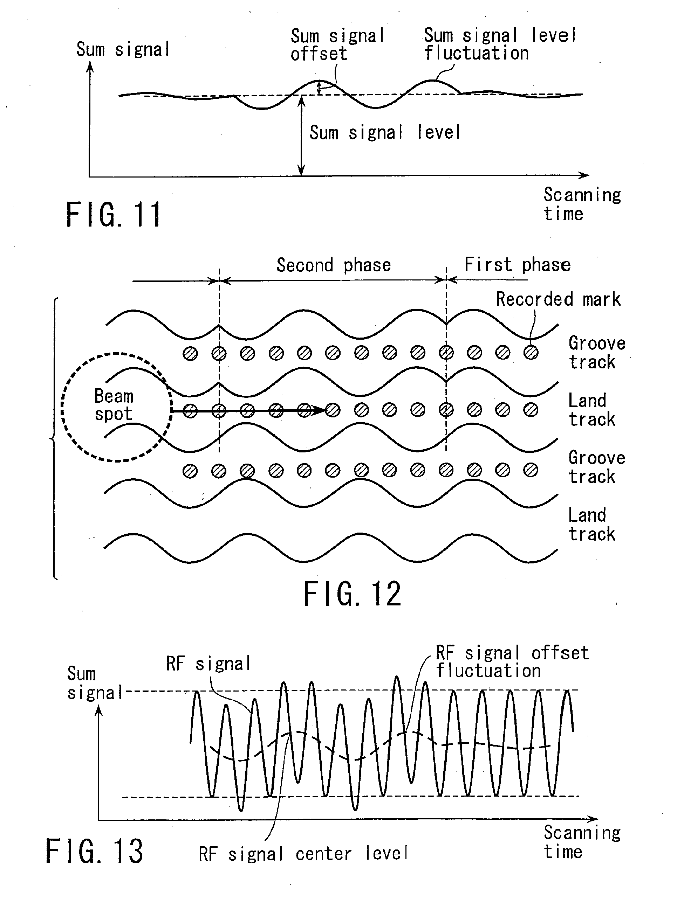

FIG. 10 shows a top plan view of the phase-modulated track. In FIG. 10, groove tracks are phase-modulated. At this time, land tracks are noticed. The sum signal of the land track adjacent to the phase-modulated portion of the groove track is shown in FIG. 11. When the phases of the groove tracks on the opposite side of the land track to be reproduced are equal to each other, the sum signal of the land track hardly changes. However, when the phases of the groove tracks on the opposite sides are different from each other, the sum signal largely changes. This is because the track width of the land becomes narrow or thin with places in a case where the phases are different. This fluctuation of the track width causes an offset of the sum signal, that is, the RF signal.

FIG. 12 shows a top plan view of the disk in which user information (recorded mark) is recorded in both the tracks. When the phases of the adjacent groove tracks are different from each other, as shown in FIG. 13, a large sine offset voltage (hereinafter referred to simply as the offset) is generated also in the RF signal including the user information. Here, when the offset of the RF signal is large, a large disturbance is caused during reproduction of the user information from the RF signal. This sine offset is generated, even when a relation between land and groove is reversed.

A sine offset amount is determined by a phase difference between a wobble amplitude of one of adjacent groove tracks and that of the other groove track. When the phase difference is small, the offset amount of the RF signal is reduced. On the other hand, spindle rotation control information, recording clock information, and physical address produced from the wobble signal obtain high precision, when the amplitude of the wobble track is larger and a difference of phase for use in modulation is larger.

In the optical disk of the present invention, the phase for use in the modulation of the wobble track is appropriately selected, and the wobble track amplitude is set to an appropriate value. Accordingly, the offset fluctuation of the RF signal is reduced to such a level that any problem is not caused in the reproduction of the user information. It is further possible to keep a sufficient precision of each information produced from the wobble signal.

Especially in the present invention, optimum two types of phases are selected from a plurality of phases for use in usual multi-value phase modulation. Accordingly, the phase difference between the adjacent tracks is reduced, and the offset fluctuation of the RF signal is suppressed.

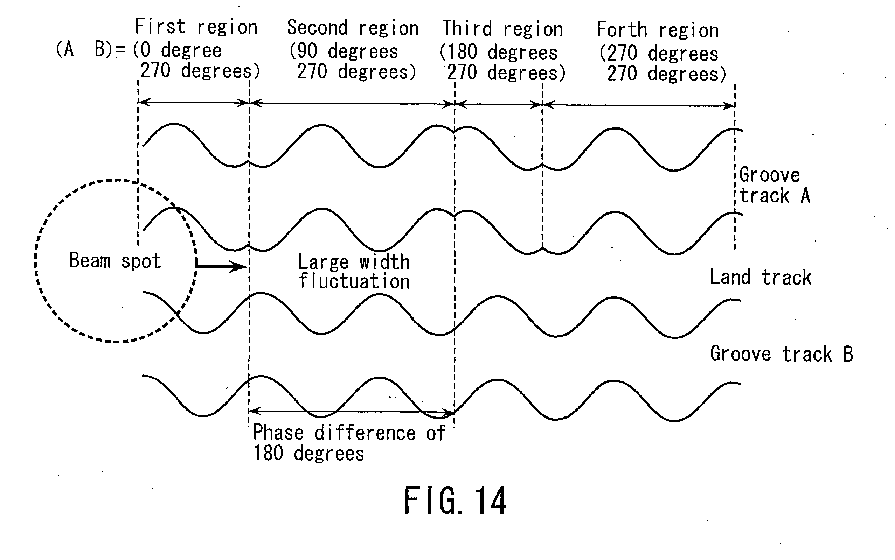

For example, for four-value phase modulation using phases of 0, 90, 180, 270 degrees, as shown in FIG. 14, the four-value phases appear at random in usual modulation. Then, a state occurs in which one of the tracks disposed adjacent to each other indicate 90 degrees and the other indicates 270 degrees as in groove tracks A and B of a second region in FIG. 14. In this state, the phase difference between the tracks on the opposite sides is 180 degrees. Therefore, in the optical disk of the embodiment of the present invention, the wobble is modulated in any of sets constantly having a minimum phase difference between two groove tracks disposed adjacent to the land track, that is, the sets of (0 degree, 90 degrees), (90 degrees, 180 degrees), (180 degrees, 270 degrees), and (270 degrees, 0 degree). That is, in the optical disk of the present embodiment, the phase difference between the adjacent wobbles is limited to a value which is less than 180 degrees.

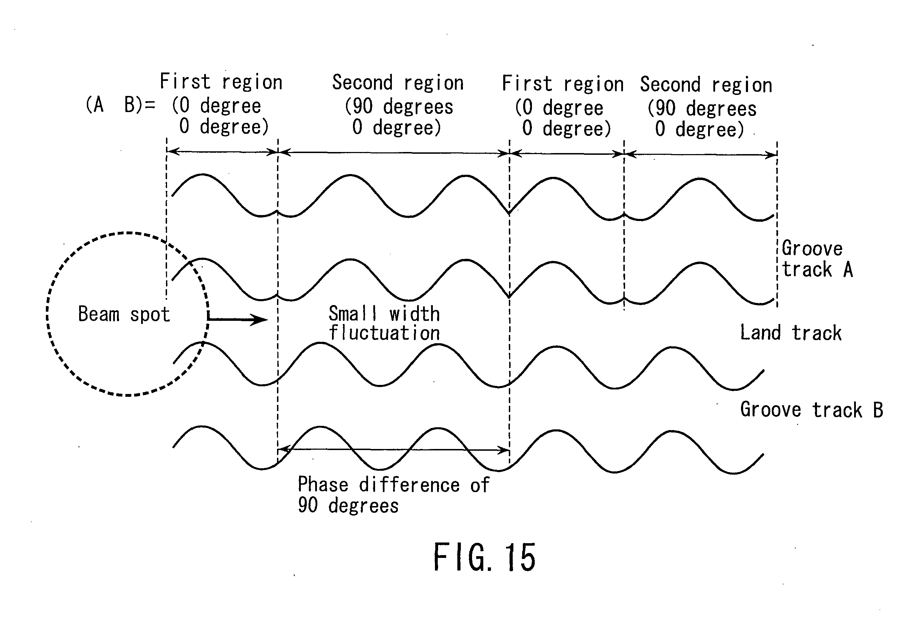

In this case, as shown in FIG. 15, a maximum phase difference Pmax between the adjacent tracks can be suppressed down to 90 degrees. This relation is represented by the following equation.

$$Pmax = 360/4 = 90 \text{ degrees} \qquad (1)$$

Similarly, with the use of eight-value phase modulation, Pmax can be suppressed to 45 degrees.

$$Pmax = 360/8 = 45 \text{ degrees} \qquad (2)$$

Here, the track width with a maximum phase difference of 180 degrees fluctuates by a wobble track amplitude. Assuming that a fluctuation amount is 100%, the fluctuation amount of the track width for each phase is represented by the following equation.

$$\text{Track width fluctuation amount} =$$

$$100 \times \sin(Pmax/2) \% \qquad (3)$$

That is, with Pmax of 90 degrees, the amount is 70.7%. With 45 degrees, the amount is 38.3%. When the width fluctuation amount of the track is small, the offset amount of the RF signal becomes small.

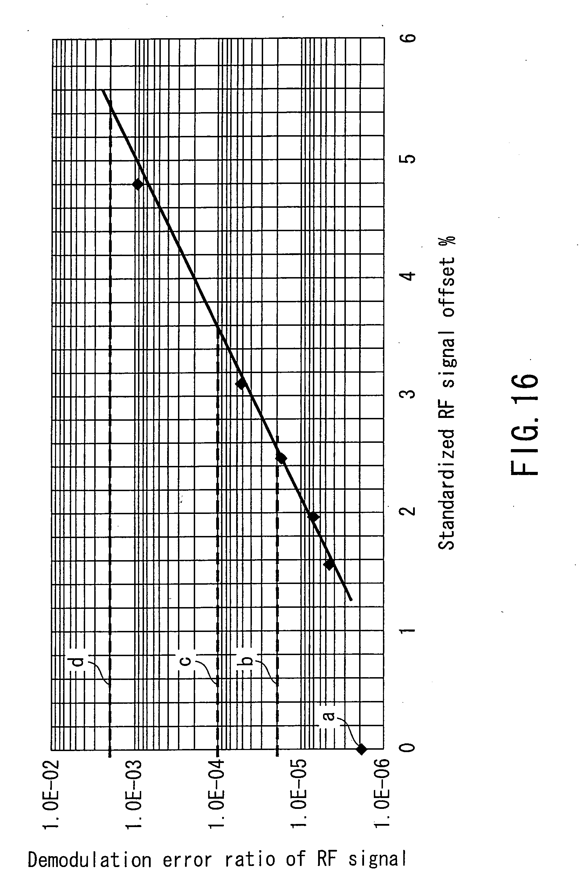

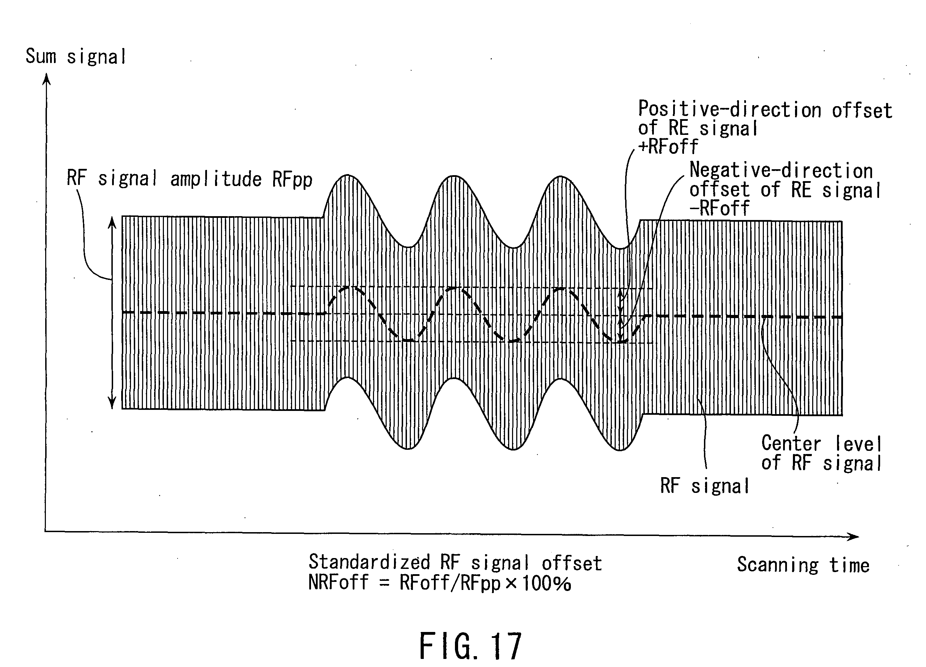

Next, FIG. 16 shows a relation between an offset amount of the RF signal (standardized RF signal offset) and a demodulation error ratio in demodulating the user information from the RF signal with the use of the optical disk drive of the embodiment of the present invention in which NA of an objective lens: 0.65, a laser wavelength: 405 nm, a disk substrate (surface cover layer) thickness: 0.6 mm, a groove interval is 0.68 μm, and a data bit length is 0.13 μm. Here, the present optical disk drive includes a demodulation circuit of a PRML system, and an error correction circuit by ECC, and a modulation system whose shortest code is 2T is used to record the user information. The wobble signal is recorded in phase modulation in which a phase difference is 180 degrees at maximum. That is, the above-described control of the offset fluctuation of the RF signal by limitation of the maximum phase difference between the adjacent tracks is not carried out. The offset amount of the RF signal is standardized by dividing the amount by a maximum amplitude of the RF signal as shown in FIG. 17. That is, the standardized RF signal offset is represented by the following equation.

$$\text{Standardized RF signal offset (NRFoff)} =$$

$$| \text{ RF signal offset amount (RFoff)} | /$$

$$\text{RF signal amplitude (RFpp)} * 100\% \qquad (4)$$

A limitation of the offset of the RF signal in which the recording of the physical address by the wobble modulation and the land-and-groove recording of the user information are possible can be derived from the relation of FIG. 16. Usually, even when there is not any phase difference between the adjacent track wobbles or there is not any offset of the RF signal, the demodulated information includes some errors by various influences of disk noise, laser noise, servo noise, and disturbance. As a result, even when there is not any offset of the RF signal, the demodulation error ratio of the RF signal of the optical disk drive is about $2.0 \times 10\text{-}6$ (refer to error ratio a). These errors are corrected by error correction processing such as ECC, and are read out as correct information. Considering from a usual error correction processing capability, even when the error indicates a value about ten times the above-described value, the correction is possible with a sufficient margin. Therefore, it may be said that the offset of the RF signal may exist in a range in which the demodulation error ratio of the RF signal is ten times (refer to error ratio b). In this case, the offset of the RF signal is 2.5%. That is, it can be said that when the offset of the RF signal is 2.5% or less, the reading of the user information from the RF signal is not influenced.

Here, further arrangement of physical addresses by the wobble modulation is taken into consideration. As shown in FIGS. 12 and 13, the fluctuation of the track width which is a cause for the offset of the RF signal occurs, when the phase difference of the wobbles between the adjacent tracks exists. Therefore, even when the track changes, but when the information (wobble waveform) does not change, the offset of the RF signal is not generated. For the constitution of the physical address shown in FIGS. 8 and 9, when the track changes, the track number changes. The other synchronous signal, segment number, and the like change in the tangential direction of the track, but do not change in the radial direction in which the track number changes. When the track changes, only the track number and associated portions change. Also for a region in which the track number is recorded, all the bits indicating the track number are not reversed every time. Therefore, the maximum phase difference is not generated in all the bits. Therefore, in actual, it is possible to reduce a region in which the offset of the RF signal by the wobble modulation is generated to 20% or less of the whole. That is, even when the error ratio is deteriorated 50 times (see error ratio c) by the offset of the RF signal in the offset generated region as compared with a region including no offset, the error ratio can be said to be deteriorated about ten times in the whole recording region. Therefore, it can be said that when the offset of the RF signal is 3.6% or less, the reading of the user information from the RF signal is not influenced. That is, when the address information is recorded, the information is divided into track address information and another information or is otherwise restricted, and a margin can then be obtained. It is to be noted that this restriction is generally carried out.

Moreover, an error correction bit is usually disposed during the recording of the physical address, and the error correction bit is determined by data of a track address. Therefore, the offset of the RF signal is generated even in the correction bit. Contrarily, when the correction bit is not used, a section of the RF signal offset can further be reduced to about the half. When the correction bit is not used, the address information is not corrected by a bit unit. However, the track continues in the optical disk of the present invention. Therefore, even when there is one read error of the address information, the correction is possible because of continuity to the previous/subsequent address. Concerning the track number, since there are a plurality of segments in the track, the same track number is recorded in the same track a plurality of times. Therefore, even when there are several errors, the correction is possible by majority decision. Consequently, the correction bit is not necessarily required.

On the other hand, the disturbance such as aberration by disk tilt or substrate thickness error is considered as a general parameter that influences the error ratio at the time of demodulation of the RF signal. In this case, for example, when tilt correction servo or aberration correction mechanism is used, the disturbance can be inhibited.

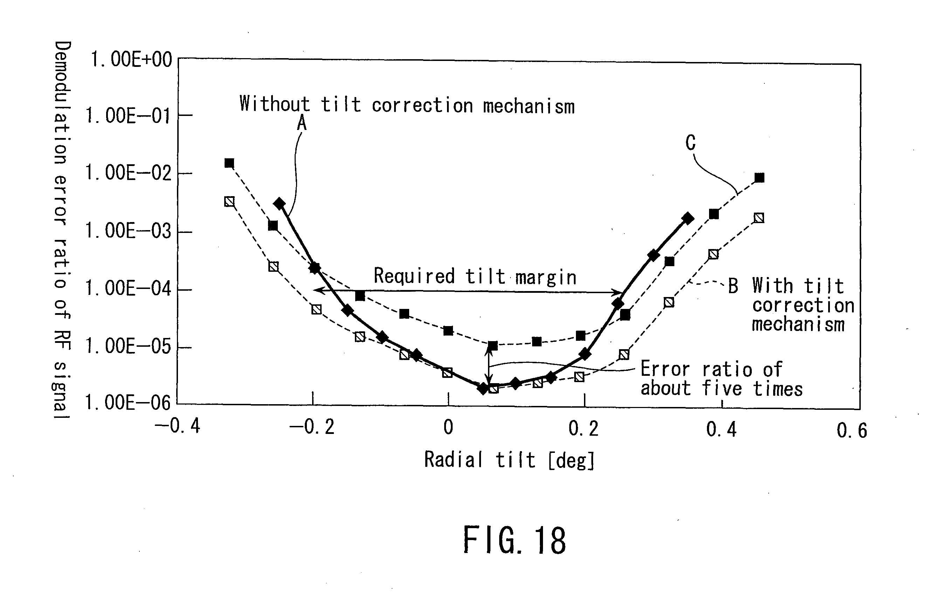

FIG. 18 shows a relation between a radial tilt of the disk and the demodulation error ratio of the RF signal. Curve A shows characteristics in a case where there is not any tilt correction mechanism, curve B shows characteristics case where the tilt correction mechanism is disposed, and curve C shows characteristics in case where the error ratio of the characteristics B is five times. Here, assuming that an allowable demodulation error ratio of the RF signal is 10-4, a required tilt margin is a region shown by a bold arrow in the diagram (about ±0.2 deg). As seen from the diagram, when the tilt correction mechanism is disposed in a recording/reproducing device, the margin of the demodulation error ratio of the RF signal can be spread by about 1.3 times as in the characteristics B. As a result, even when a bottom error ratio (characteristics B) is deteriorated about five times, it is possible to correctly demodulate the user information.

Therefore, even when an RF signal read error ratio in the region of occurrence of the RF offset by the wobble modulation is 1000 times that in the region including no offset (see error ratio d), the ratio is about 50 times seen from the whole recording region with a devise added to the recording method of the address or the like. Furthermore, even when the error ratio is 50 times, for example, as shown in FIG. 18, the tilt correction servo or the aberration correction mechanism is used in the optical disk drive, and in actual the ratio becomes about ten times. Therefore, it is possible to correctly demodulate the user information with the margin.

That is, as shown by the error ratio d of FIG. 16, it can be said that even when the offset of the RF signal is 5.5% or less, the reading of the user information from the RF signal is not influenced.

Moreover, in the present embodiment, the PRML system data reproduction and the modulation system whose shortest code is 2T have been used, but the effect of the present invention is not limited to this. For example, the present invention is also effective for the use of a slice system and the modulation system whose shortest code is 3T. In this case, the generation amount of the error by the RF offset is equal or little as compared with the PRML system and the modulation system whose shortest code is 2T. Therefore, an offset allowable value of the RF signal is about the same or slightly larger. This is because time axis information is usable, or a shortest code amplitude is large in this case.

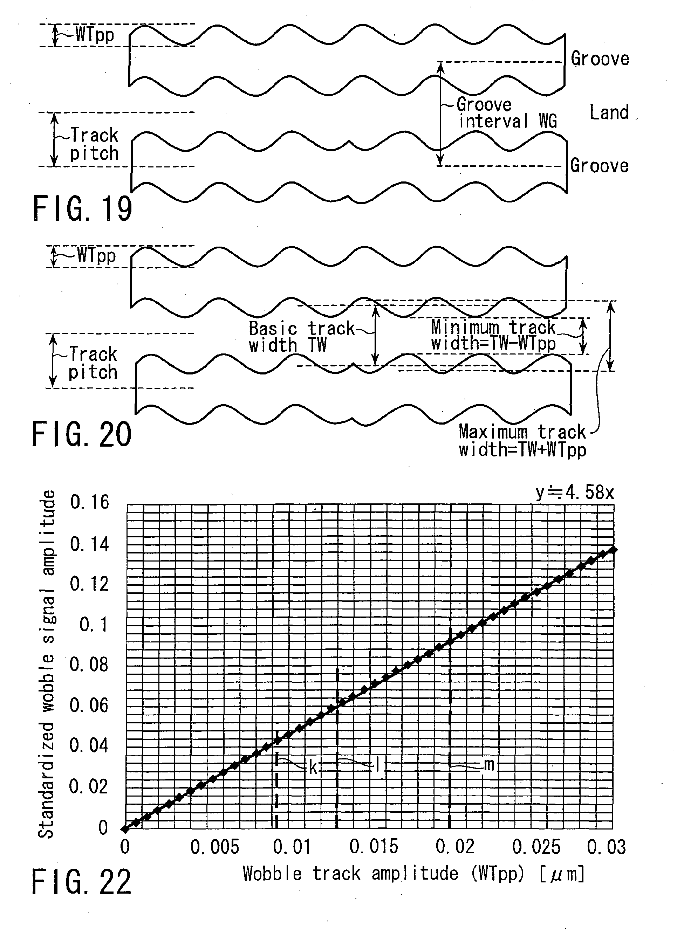

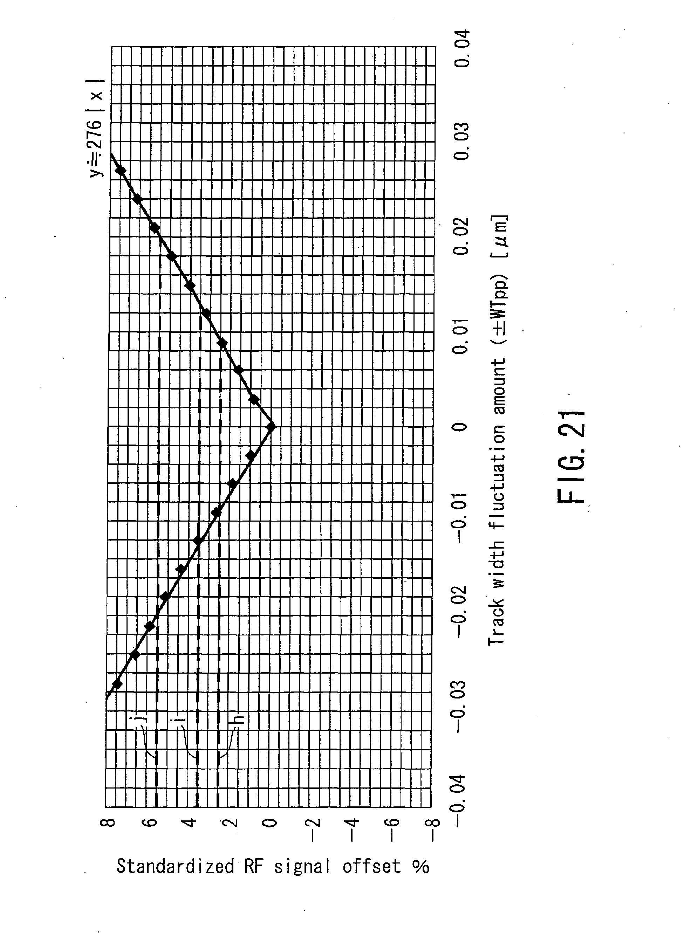

Next, a physical configuration of the optical disk which is one embodiment of the present invention will be described. As shown in FIGS. 12, 19, 20, the track is wobbled to record the physical address. Here, when the phase difference of the wobbles between the adjacent tracks is generated, the track width of the track changes. As a result, the offset of the RF signal is generated. Moreover, as seen from FIG. 20, when the phase difference between the adjacent tracks is 180 degrees, and when a maximum wobble track amplitude is assumed as WTpp, a track width fluctuation amount changes by WTpp in a spread direction and also by WTpp in a narrowing direction. Here, when there is not any phase difference between the adjacent tracks, the track width fluctuation amount has a width of 0, a direction in which the width broadens is assumed to be positive, and a narrowing direction is assumed to be negative. FIG. 21 shows a relation between the track width fluctuation amount and the offset amount of the RF signal with the use of the optical disk drive having the objective lens NA: 0.65, laser wavelength: 405 nm, disk substrate thickness: 0.6 mm, groove interval: 0.68 μm, data bit length: 0.13 μm, and groove depth: 416 nm. Here, the track width fluctuation amount indicates an absolute value of the width change with respect to a basic track width TW shown in FIG. 20.

As seen from the relation of FIG. 21, for example, when the land track width increases/decreases by 0.009 [μm], the RF signal offset is generated by 2.5% (see offset h). That is, it can be said that when the track width increases/decreases by 0.009 [μm] or less, the reading of the user information from the RF signal is not influenced as described in the error ratio b of FIG. 16. As seen from the relation shown in FIG. 20, when the wobble track amplitude (WTpp) is 0.009 [μm] or less, the increase/decrease of the track width can be reduced to 0.009 [μm] or less.

It is seen that, for example, with the increase/decrease of the track width by 0.013 [μm], the RF signal offset is generated by 3.6% (see offset i). That is, it can be said that when the track width is 0.013 [μm] or less,

the reading of the user information from the RF signal is not influenced as described in the error ratio c of FIG. 16. That is, when the address information is recorded, the information is divided into the track address information and the other information or is otherwise restricted, the margin is secured, and the user information can be read. As seen from the relation shown in FIG. 20, when the wobble track amplitude (WTpp) is 0.013 [μm] or less, the increase/decrease of the track width can be suppressed to 0.013 [μm] or less.

It is also seen that, for example, with the increase/decrease of the track width of 0.02 [μm], an RF signal offset of 5.5% is generated (see offset j). That is, it can be said that even when the track width increases/decreases by 0.02 [μm] or less, the reading of the user information from the RF signal is not influenced as described in the error ratio d of FIG. 16. That is, for example, when the recording method of the address is devised or the disturbance correction mechanism is added to the optical disk drive, the margin can be secured in reading the user information. As seen from the relation shown in FIG. 20, when the wobble track amplitude (WTpp) is 0.02 [μm] or less, the increase/decrease of the track width can be suppressed to 0.02 [μm] or less.

Moreover, in the present invention, the description has been based on the groove interval of 0.68 μm, but the present invention is not limited to this. In general, the influence of the width fluctuation of the track over the offset of the RF signal is proportional to the groove interval. Therefore, as shown by an offset h of FIG. 21, in the groove interval of 0.68 μm, the width fluctuation is 0.009 μm, and the RF signal offset is 2.5%. This relation can be standardized by a track pitch. That is, assuming that the groove interval is GW μm, width fluctuation $Y = (0.009/0.680) \times GW = 0.0132 \times GW$, and the RF signal offset is 2.5%. This relation is established. Also with width fluctuations of 0.015 μm, 0.02 μm, it is similarly possible to standardize the relation with the track pitch. That is, with the groove interval GW-μm, a relation of the width fluctuation $Y = 0.0221 \times GW$ and the RF signal offset of 4.0% is established. Moreover, with the groove interval GWμm, a relation of the width fluctuation $Y = 0.0294 \times GW$ and the RF signal offset of 5.5% is established. That is, it can be said that when the fluctuation width is about 3% of the groove interval, the reading of the user information from the RF signal is not influenced as described in the error ratio d of FIG. 16. That is, for example, when the recording method of the address is devised or the disturbance correction mechanism is added to the optical disk drive, the margin can be secured in reading the user information.

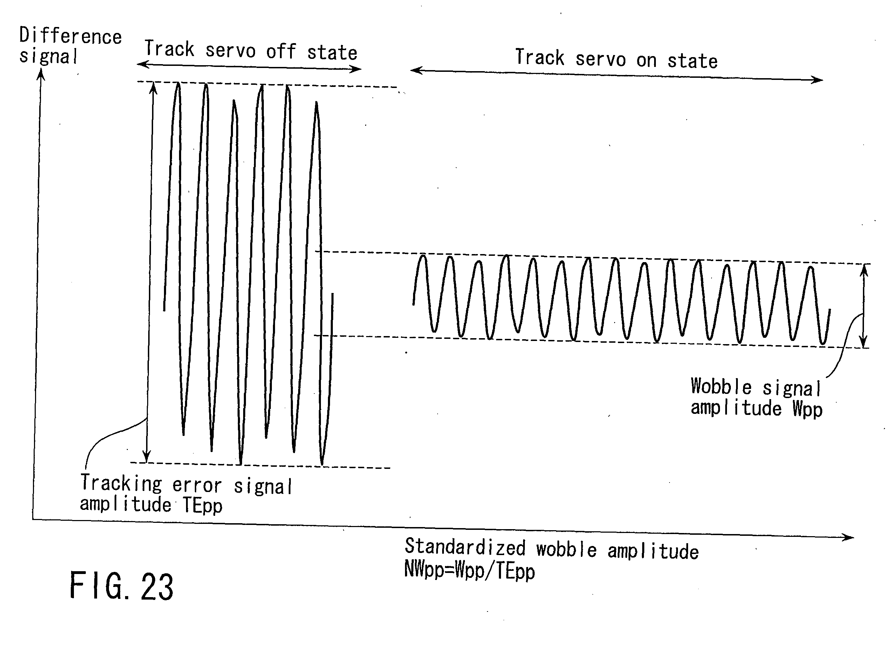

Next, a relation between the standardized wobble signal amplitude and the offset of the RF signal for estimating the width fluctuation amount of the wobble track will be described. FIG. 22 shows a relation between the wobble track amplitude (WTpp) and the standardized wobble signal amplitude. Here, the standardized wobble signal amplitude is obtained by dividing the wobble signal amplitude (WTpp) shown in FIG. 23 by the maximum amplitude (TEpp) of the tracking error signal. The maximum amplitude TEpp is an amplitude of the tracking error signal obtained at a time when the track servo is off and the beam spot crosses the track.

Standardized wobble signal amplitude (NWpp) =

wobble signal amplitude (Wpp)/

tracking error signal amplitude (TEpp)     (5)

It is seen from the relation of FIG. 22 that when the standardized wobble signal amplitude is 0.045, the amplitude of the wobble track is 0.009 μm (see amplitude k). That is, when the standardized wobble signal amplitude is 0.045 or less, the wobble track amplitude is 0.009 μm or less. At this time, the width fluctuation of the track is 0.009 μm or less on conditions that the wobble phase difference between the adjacent tracks differs. Therefore, the offset of the RF signal is 2.5% or less, and it can be said that the reading of the user information from the RF signal is not influenced.

Similarly, when the standardized wobble signal amplitude is 0.06 or less, the offset of the RF signal is 3.6% or less, and it can be said that the reading of the user information from the RF signal is not influenced (see amplitude 1). That is, when the recording method of the address is restricted, the margin can be secured in reading the user information.

Similarly, even when the standardized wobble signal amplitude is 0.09 or less, that is, the amplitude is 9% or less of the tracking error signal amplitude, it can be said that the reading of the user information from the RF signal is not influenced (see amplitude m). That is, when the recording method of the address is devised or the disturbance correction mechanism is added to the optical disk drive, the margin can be secured in reading the user information.

In the present embodiment, the circuit shown in FIG. 7 is used to read the information such as the physical address from the wobble signal. At this time, the larger the wobble signal amplitude is, the smaller the wobble demodulation error ratio becomes during the demodulation of the physical address information or the like from the wobble signal.

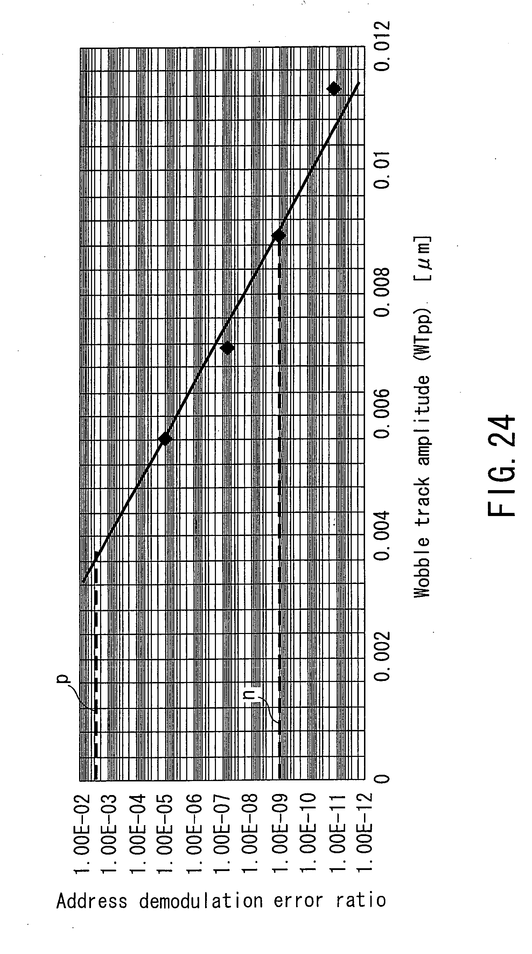

FIG. 24 shows the relation between the amplitude of the wobble groove and the wobble demodulation error ratio with the use of the optical disk drive of one embodiment of the present invention having the objective lens NA: 0.65, laser wavelength: 405 nm, disk substrate thickness: 0.6 mm, and groove interval: 0.68 μm. In general, when the demodulation error ratio of the address is $1.0 \times 10\text{-}9$ or less, the optical disk drive can access the desired position without any problem. This is because the track continues in the optical disk. Therefore, even when there are several tens of read errors of the address information, the correction is possible from the continuity from the previous/subsequent address. Here, from the relation of FIG. 24, when the wobble track amplitude is 0.009 μm or more, the information such as the physical address can normally be read from the wobble signal (see error ratio n).

Moreover, when the address information is recorded in the same track or segment a plurality of times, or the disturbance correction mechanism is disposed in the optical disk drive, the optical disk drive can access the desired position without any problem even with the demodulation error ratio of the address of $1.0 \times 10\text{-}3$ or less. For example, when the same address information is recorded a plurality of times, the correction is possible by the majority decision even with the increase of errors. That is, when the wobble track amplitude is 0.0035 μm or more, the information such as the physical address can normally be read from the wobble signal (see error ratio p). This value is standardized as 0.00515 by the groove interval (0.68 μm). Therefore, when the wobble track amplitude is 0.52% or more of the groove interval, the information such as the physical address is normally read from the wobble signal.

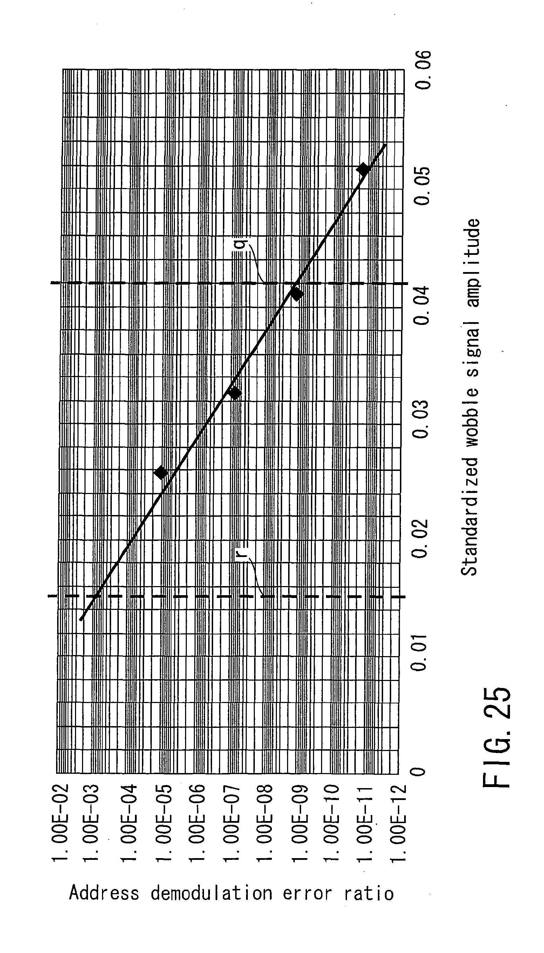

Next, a relation between the standardized wobble signal amplitude and the wobble demodulation error ratio for estimating the width fluctuation amount of the wobble track will be described. As described above, the standardized wobble signal amplitude is obtained by dividing the wobble signal amplitude (WTpp) by the maximum amplitude (TEpp) of the tracking error signal. From the relation of FIG. 25, when the standardized wobble amplitude is 0.042 or more, the demodulation error ratio of the address is $1.0 \times 10\text{-}9$ or less (see amplitude q). That is, when the standardized wobble amplitude is 0.042 or more, the information such as the physical address is normally read from the wobble signal. From the relation of FIG. 25, when the standardized wobble amplitude is 0.016 or more, the demodulation error ratio of the address is $1.0 \times 10\text{-}3$ or less (see amplitude r). That is, when the standardized wobble amplitude is 0.016 or more, the information such as the physical address is normally read from the wobble signal. Therefore, when the wobble amplitude is 1.6% or more of the tracking error signal amplitude, the information such as the physical address is normally read from the wobble signal. Additionally, in order to secure the sufficient margin, it is necessary to record the same address information a plurality of times or to dispose the disturbance correction mechanism in the optical disk drive.

The present embodiment has been described above with the objective lens NA: 0.65, laser wavelength: 405 nm, disk substrate thickness: 0.6 mm, data bit length: 0.13 μm, and groove depth: 416 nm, but the effect of the present invention is not limited to this. Since the offset of the RF signal, the wobble signal amplitude, or the like is standardized by the RF signal amplitude, the maximum tracking error signal amplitude, or the like, the respective values of the present invention do not lose the effects even with the change of NA, laser wavelength, or the like.

Moreover, in the above-described embodiment, the wobble signal is recorded in the phase modulation having a phase difference of 180 degrees at maximum, but the effect of the present invention is not limited to this. As described above, the phase modulation having a phase difference of 90 degree at maximum may also be used. From the relation shown in Equation (1), when the maximum phase difference is suppressed at 90 degrees, the track width fluctuation amount is suppressed at 70.7% of the groove wobble amplitude. That is, when the wobble groove amplitude is (100/70.7) times 0.02 μm, that is, 0.028 μm or less, the track width fluctuation amount is 0.02 μm or less. At this time, the standardized RF signal offset is 5.5% or less, and it can be said that the reading of the user information from the RF signal is not influenced (see offset j of FIG. 21).

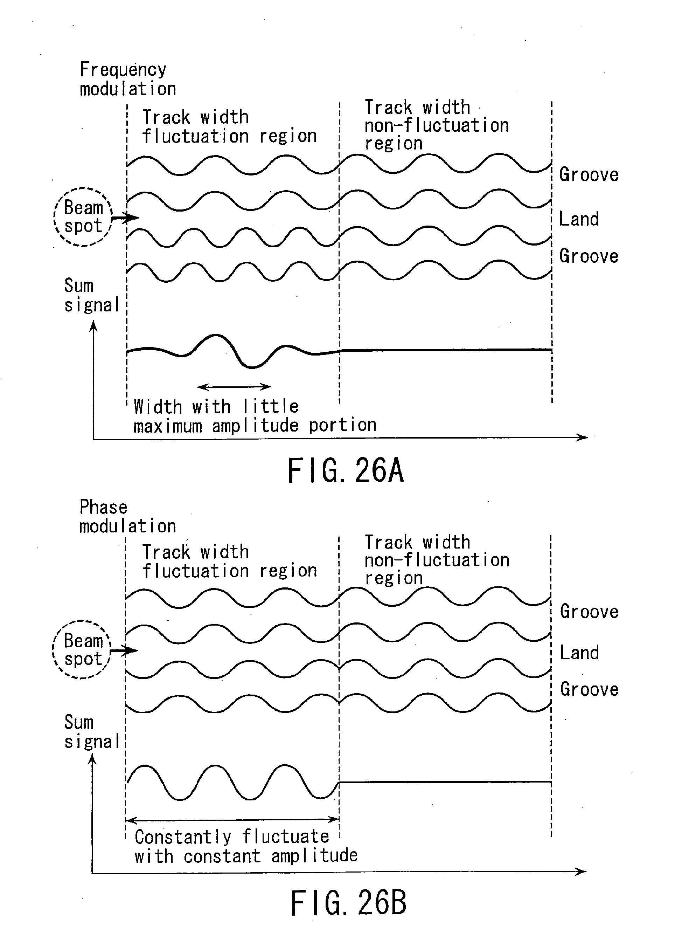

Moreover, instead of the phase modulation, frequency modulation may also be used in the modulation. With the use of the frequency modulation, as shown in FIG. 26A, the generated amount of the offset of the RF signal is smaller than that in the phase modulation of FIG. 26B on average. Therefore, even when the fluctuation of the track width increases by about 1.5 times that in the phase modulation described above, it can be said that the reading of the user information from the RF signal is not influenced.

Next, estimate of the standardized RF signal offset will be described.

As shown in FIG. 10, when the wobble phases of the adjacent tracks differ from each other, the fluctuation of the sum signal can be observed even in a portion in which the user information is not recorded. Here, a standardized sum signal offset obtained by dividing an offset amount of the sum signal by a level of the sum signal is defined.

Standardized sum signal offset = sum signal offset

amount/sum signal level × 100 %          (6)

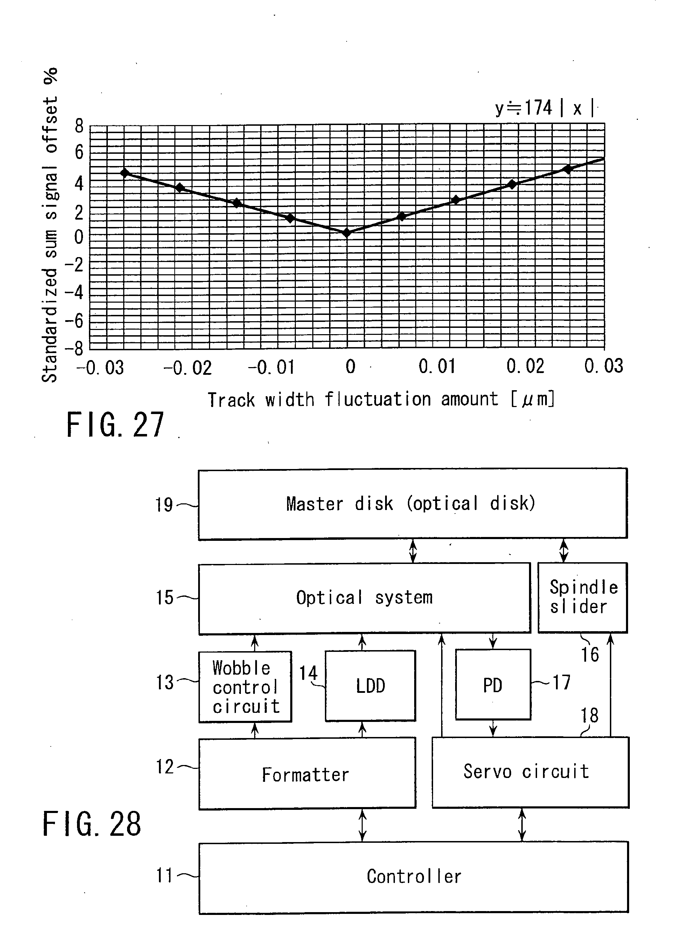

FIG. 27 shows a relation between a standardized sum signal offset and track width fluctuation amount with the use of the optical disk drive having the objective lens NA: 0.65, laser wavelength: 405 nm, disk substrate thickness: 0.6 mm, and groove interval: 0.68 μm. It is seen from this relation, for example, that the track width change amount is 0.02 μm with a standardized sum signal offset of 3.5%. It is seen from the relation of the offset j of FIG. 21 that the standardized RF offset is 5.5% with a track width change amount of 0.02 μm. That is, even before recording the user information, the standardized sum signal offset is measured. When the offset is 3.5% or less, it can be said that the reading of the user information from the RF signal is not influenced. In this manner, when the relation of FIG. 27 is used, the standardized RF signal offset can be estimated without recording the user information.

Next, a mastering device for preparing a master disk will be described.

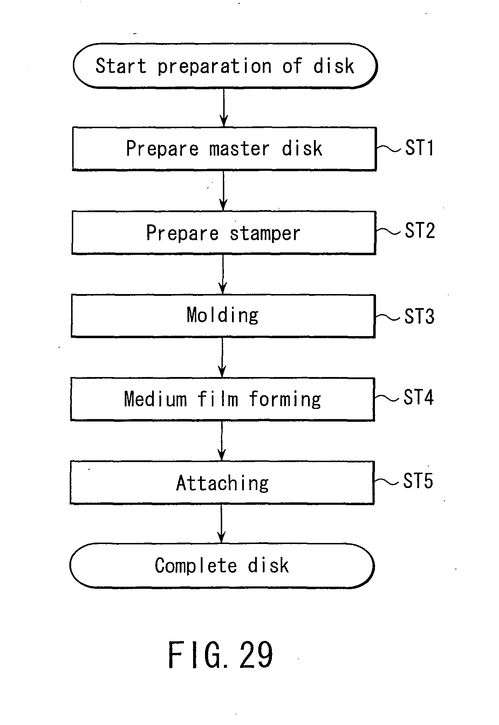

FIG. 28 shows a constitution diagram of the mastering device which is a part of a manufacturing device of an optical disk medium according to one embodiment of the present invention. FIG. 29 shows a flowchart of preparation of the optical disk medium. The optical disk medium of the present invention is prepared through steps of master disk preparation (ST1), stamper preparation (ST2), molding (ST3), medium film forming (ST4), and attaching (ST5). In the master disk preparation step (ST1), a flat master disk is coated with a resist, and the resist on the master disk is photosensitized by the mastering device of FIG. 28. Further the photosensitized resist is removed by development to prepare the master disk including the concave and convex portions similarly as in the information recording layer of the final optical disk medium. In the stamper preparation step (ST2), the master disk is plated with Ni or the like to form a metal plate having a sufficient thickness, and the master disk is peeled to prepare the stamper. At this time, the concave and convex portions formed on the master disk are reversed and formed on the stamper. Next in the molding step (ST3), the stamper is used as a mold to pour a resin such as polycarbonate into the stamper, and a substrate is molded. At this time, the concave and convex portions of the stamper are transferred onto the surface of the molded substrate. That is, substantially the same concave and convex portions as those of the master disk are formed. Next, a recording material is formed into a film in the concave and convex portions by sputtering (ST3), another substrate is attached in order to protect a portion on which the film is formed (ST5), and the optical disk medium is completed. That is, the guide groove including the groove, the wobble track, and the like are recorded by the mastering device shown in FIG. 28.

In the mastering device of FIG. 28, a laser light amount of an optical system is controlled based on a signal outputted to a laser driver (LDD) 14 from a formatter 12. The laser light beam is transmitted through an A0 modulation unit, objective lens, and the like included in an optical system 15, and a master disk 19 is irradiated with the beam. The focusing of the irradiation light or the like is controlled by a servo circuit 18. Rotation or the position of the radial direction of the disk is also similarly controlled. Since a portion of the master disk 19 irradiated with the light beam is photosensitized, this portion forms the guide groove or the like. The formatter 12 outputs the signal to a wobble control circuit 13 based on the physical address information to be recorded in the optical disk. The wobble control circuit 13 controls the AO modulation unit or the like in the optical system 15, and can accordingly oscillate a spot of the light beam with which the master disk 19 is irradiated, that is, can move the spot slightly in the radial direction.

Here, the wobble control circuit 13 is controlled in such a manner that the control amount of the radial direction is 0.52% or more and 3% or less of the guide groove interval. Then, the prepared optical disk can read the physical address by the wobble modulation, and there is provided the optical disk medium capable of reading user data from the RF signal.

**Claims**

1. An information recording medium **characterized by** comprising a guide groove along which information is recorded/reproduced in an information recording region, the information being formed as a recorded mark in both of concave and convex portions of the guide groove, management information including address information being recorded by a wobble of the guide groove,

an offset of a reproducing signal of the recorded mark generated by the wobble of the guide groove is 5.5% or less of an amplitude of the reproducing signal.

2. An information recording medium **characterized by** comprising a guide groove along which information is recorded in an information recording region, the information being formed as a recorded mark in both of concave and convex portions of the guide groove, management information including address information being recorded by a wobble of the guide groove,

wherein an increase/decrease of a width of one of the concave and convex portions of the guide groove generated by the wobble of the other portion is 3% or less of one of an interval between the concave portions and an interval between the convex portions.

3. An information recording medium **characterized by** comprising a guide groove along which information is recorded in an information recording region, the information being formed as a recorded mark in both of concave and convex portions of the guide groove, management information including address information being recorded by a wobble of the guide groove,

wherein an amplitude of the wobble of the guide groove is 3% or less of one of an interval between the concave portions and an interval between the convex portions.

4. An information recording medium **characterized by** comprising a guide groove along which information is recorded in an information recording region, the information being formed as a recorded mark in both of concave and convex portions of the guide groove, management information including address information being recorded by a wobble of the guide groove,

wherein a signal amplitude by the wobble of the guide groove reproduced by an information recording/reproducing device which irradiates the information recording medium with a light beam to play the information recording medium is 9% or less of a maximum amplitude of a signal produced at the time of when the light beam crosses the guide groove.

5. An information recording medium **characterized by** comprising a guide groove along which information is recorded in an information recording region, the information being formed as a recorded mark in both of concave and convex portions of the guide groove, management information including address information being recorded by a wobble of the guide groove,

wherein an amplitude of the wobble of the guide groove is 0.52% or more of one of an interval between the concave portions and an interval between the convex portions.

6. An information recording medium **characterized by** comprising a guide groove along which information is recorded in an information recording region, the information being formed as a recorded mark in both of concave and convex portions of the guide groove, management information including address information being recorded by a wobble of the guide groove,

wherein a signal amplitude by the wobble of the guide groove reproduced by an information recording/reproducing device which irradiates the information recording medium with a light beam to play the information recording medium is 1.6% or more of a maximum amplitude of a signal produced at the time of when the light beam crosses the guide groove.

7. An information recording method for recording management information by a wobble of a guide groove using a light beam into an information recording medium **characterized by** comprising: a guide groove along which information is recorded in an information recording region, in which user data is recorded/reproduced with respect to both concave and convex portions of the guide groove and in which management information is recorded by the wobble of the guide groove, the method comprising:

focusing the light beam on the information recording medium to form the guide groove in the information recording medium;
oscillating the light beam to wobble the guide groove in a radial direction of the information recording medium;
judging whether the wobble is 0.52% or more and 3% or less of a guide groove interval; and increasing an oscillating amount, when the wobble is 0.52% or less and decreasing the oscillating amount, when the wobble is 3% or more.

8. An information recording device to record management information by a wobble of a guide groove into an information recording medium (19) **characterized by** comprising: a guide groove along which information is recorded in an information recording region, in which user data is recorded/reproduced with respect to both concave and convex portions of the guide groove and in which management information is recorded by the wobble of the guide groove, the device comprising:

an optical system (15) which focuses the light beam on the information recording medium (19) to form the guide groove in the information recording medium (19);
an oscillating portion which oscillates the light beam to wobble the guide groove in a radial direction of the information recording medium (19); and
a controller (13) which controls the oscillating portion so that the wobble is 0.52% or more and 3% or less of a guide groove interval.

FIG. 1

FIG. 2

FIG. 3

Information
recording region

Track

Enlarged portion
(FIG. 4)

Clamp hole

FIG. 4

Land track

Recorded mark

Groove track

FIG. 5A

Wobble track amplitude    Wobble track

Groove track

Beam spot

Land track

Groove track

Land track

FIG. 5B

Sum signal

Scanning time

FIG. 5C

Difference signal

Radial push/pull signal

Scanning time

Frequency modulation

First frequency | Second frequency | First frequency | Second frequency

## FIG. 6A

Phase modulation

First phase | Second phase | First phase | Second phase

## FIG. 6B

Wobble PLL

Band pass filter → Phase comparator → Low pass filter → Binarizing unit → Address information processing circuit

Radial push/pull signal

Address information

## FIG. 7

FIG. 8

| Synchronous signal | Segment number | Track number | Correction bit | Other information |
|---|---|---|---|---|

FIG. 9

FIG. 10

First phase | Second phase | First phase

Groove track
Land track
Groove track
Land track

Beam spot

Wobble track amplitude

Wobble track

Sum signal

Sum signal
offset

Sum signal level
fluctuation

Sum signal level

Scanning
time

FIG. 11

Second phase          First phase

Recorded mark

Groove
track

Beam
spot

Land
track

Groove
track

Land
track

FIG. 12

Sum
signal

RF signal

RF signal offset
fluctuation

RF signal center level

Scanning
time

FIG. 13

16

First region (A B)=(0 degree 270 degrees)  
Second region (90 degrees 270 degrees)  
Third region (180 degrees 270 degrees)  
Forth region (270 degrees 270 degrees)

Beam spot

Large width fluctuation

Groove track A

Land track

Groove track B

Phase difference of 180 degrees

FIG. 14

EP 1 441 333 A2

First region (A B)= (0 degree 0 degree)

Second region (90 degrees 0 degree)

First region (0 degree 0 degree)

Second region (90 degrees 0 degree)

Beam spot

Small width fluctuation

Groove track A

Land track

Groove track B

Phase difference of 90 degrees

FIG. 15

EP 1 441 333 A2

FIG. 16

Sum signal

RF signal amplitude RFpp

Positive-direction offset
of RE signal
+RFoff

Negative-direction
offset of RE signal
−RFoff

Center level
of RF signal

RF signal

Standardized RF signal offset
NRFoff = RFoff/RFpp × 100%

Scanning time

FIG. 17

EP 1 441 333 A2

FIG. 18

FIG. 19

FIG. 20

FIG. 22

FIG. 21

EP 1 441 333 A2

Difference
signal

Track servo off state

Track servo on state

Wobble signal
amplitude Wpp

Tracking error signal
amplitude TEpp

Standardized wobble amplitude
NWpp=Wpp/TEpp

FIG. 23

EP 1 441 333 A2

FIG. 24

FIG. 25

Frequency
modulation

Track width
fluctuation region

Track width
non-fluctuation
region

Groove

Beam
spot

Land

Groove

Sum
signal

Width with little
maximum amplitude portion

FIG. 26A

Phase
modulation

Track width
fluctuation region

Track width
non-fluctuation
region

Groove

Beam
spot

Land

Groove

Sum
signal

Constantly fluctuate
with constant amplitude

FIG. 26B

FIG. 27

FIG. 28

Start preparation of disk

Prepare master disk — ST1

Prepare stamper — ST2

Molding — ST3

Medium film forming — ST4

Attaching — ST5

Complete disk

FIG. 29